Europäisches Patentamt

European Patent Office

Office européen des brevets

(19)

(11) Veröffentlichungsnummer : **0 007 638**
**B1**

(12) **EUROPÄISCHE PATENTSCHRIFT**

(45) Veröffentlichungstag der Patentschrift :
02.12.81

(21) Anmeldenummer : 79102686.7

(22) Anmeldetag : 27.07.79

(51) Int. Cl.³ : **G 11 B  5/55**, G 05 D  3/00,
G 05 B  19/23

(54) Einrichtung zum Regeln der Geschwindigkeit eines Positionierers für die Schreib-/Leseköpfe eines Magnetplattenspeichers.

(30) Priorität : 31.07.78 DE 2833540

(43) Veröffentlichungstag der Anmeldung :
06.02.80 (Patentblatt 80/03)

(45) Bekanntmachung des Hinweises auf die Patenterteilung : 02.12.81 Patentblatt 81/48

(84) Benannte Vertragsstaaten :
AT BE CH FR IT NL

(56) Entgegenhaltungen :
FR - A - 2 258 661
US - A - 3 860 861
US - A - 4 086 636
IBM TECHNICAL DISCLOSURE BULLETIN,
Vol. 16, Nr. 12, Mai 1974,
Seiten 4064-4065, New York. U.S.A.
R. D. COMMANDER et al. « Disk File Track Access
Control »
IBM TECHNICAL DISCLOSURE BULLETIN,
Vol. 19, Nr. 7, Dezember 1976,
Seiten 2686-2687, New York, U.S.A.
D. E. BROWNBACK et al. « Measuring and Adjusting
Speed of Magnetic Disk Access Arm »
IBM TECHNICAL DISCLOSURE BULLETIN,
Vol. 20, Nr. 12, Mai 1978,
Seiten 5272-5280, New York, U.S.A.
T. M. PASKA : « Digital Track Position Information
Recording System »
IEEE TRANSACTIONS ON MAGNETICS,
Vol. MAG-14, Nr. 4, Juli 1978,
New York, U.S.A.
(IEEE Applied magnetics workshop on magnetic
recording, San Francisco, U.S.A., 27-28 Juni 1978)
B. McKNIGHT : « A Track Locating Servo System
Utilizing The Data Heads as Absolute Position Transducers »

(73) Patentinhaber : SIEMENS AKTIENGESELLSCHAFT
Berlin und München
Postfach 22 02 61
D-8000 München 22 (DE)

(72) Erfinder : Elting, Hermann
Kerschensteinerstrasse 258
D-8034 Unterpfaffenhofen (DE)
Erfinder : Küchler, Wolfgang
Gernholzweg 2 B
D-8031 Gilching (DE)

Imprimerie Jouve, 17, rue du Louvre, 75001 Paris, France

## Einrichtung zum Regeln der Geschwindigkeit eines Positionierers für die Schreib-/Leseköpfe eines Magnetplattenspeichers

Die Erfindung bezieht sich auf eine Einrichtung zum Regeln der Geschwindigkeit eines Positionierers für die Schreib-/Leseköpfe eines Magnetplattenspeichers, bei dem für eine zeitoptimale Regelung des Spurzugriffes der Positionierer erst mit einer konstanten Kraft beschleunigt und anschließend verzögert wird, mit einem Speicher, in welchem die optimale Bremskurve für den Positionierer in digitaler Form gespeichert wird.

Positioniersysteme für Plattenspeicher besitzen als Positionierantrieb meist elektrische Linearmotoren. Sie arbeiten heute praktisch ausnahmslos mit einer zeitoptimalen Regelung des Spurzugriffs. Das bedeutet, daß der Positionierer erst mit einer konstanten Kraft beschleunigt und dann wieder verzögert wird. Das heißt, die Geschwindigkeit des Positionierers nimmt abhängig vom zurückgelegten Weg während der Beschleunigungsphase nach einer Wurzelfunktion zu und während der Verzögerungsphase wieder nach einer Wurzelfunktion ab. Die zeitoptimale Regelung der Geschwindigkeit des Systems wird in bekannten Positionsregelungen wie folgt gelöst : Es wird der Inhalt eines Spurdifferenzregisters, dessen aktueller Stand die Entfernung zur Zielspur repräsentiert, in ein analoges Wegsignal umgewandelt und geglättet. Die Glättung der Wegkurve wird erreicht, indem das Geschwindigkeitssignal zwischen zwei benachbarten Zylinderimpulsen aufintegriert wird und die so entstehenden kleinen Wegdreiecke von der gestuften Wegkurve am D/A-Wandlerausgang abgezogen werden. Die geglättete Wegkurve wird von einem Wurzelfunktionsgenerator zur Sollgeschwindigkeitskurve verzerrt und dann am Eingang eines Summierverstärkers mit dem von einem induktiven oder elektronischen Geschwindigkeitsgeber gelieferten analogen Istgeschwindigkeitssignal verglichen. Der Summierverstärker verstärkt die Differenz zwischen Soll- und Istgeschwindigkeitssignal und steuert damit den Leistungsverstärker für den Tauchspulenstrom. Während der Beschleunigungsphase ist die Istgeschwindigkeit kleiner als die Sollgeschwindigkeit und damit der Leistungsverstärker voll ausgesteuert. In der Verzögerungsphase folgt die Istgeschwindigkeit der Sollgeschwindigkeit nach. Beim Leistungsverstärker handelt es sich im allgemeinen um einen Linearverstärker, d.h. zwischen Regelabweichung und Tauchspulenstrom herrscht im nicht strombegrenzten Gebiet Proportionalität.

Es sind auch Lösungen mit Schaltverstärkern bekannt geworden. In diesen Fällen wird der Verzögerungsstrom getaktet (Zweipunktregelung), wobei die Frequenz der Bremsspule zur Vermeidung von Unruhe im System einige Kilohertz beträgt. Die Änderung der Stellgröße wird erreicht durch Breitenmodulation (Phasenmodulation) der Bremsspule. Die Basis dafür bildet ein Analogvergleich der Regelabweichung mit einer Sägezahnspannung. Der Vorteil dieses Verfahrens liegt vor allem im einfachen Aufbau des Leistungsverstärkers. Aufwendiger erscheint das Verfahren der Phasenmodulation, so daß man insgesamt die bekannte nichtlineare und die bekannte lineare Geschwindigkeitsregelung des Positionierers als gleichwertig betrachten kann.

Die großen Nachteile beider Systeme sind die umfangreichen Analogkomplexe. Die Analogteile in der Regelelektronik sind aufwendig, schwierig zu prüfen und erfordern umfangreiche Zusatzschaltungen für die Diagnose. Sie sind außerdem nur mit hohem Aufwand an unterschiedliche Positioniersystem-Parameter anzupassen.

Es ist auch schon eine Geschwindigkeitssteuereinrichtung bekannt, bei der die Werte für die optimale Bremskurve des Positionierers in digitaler Form gespeichert werden. Bei der bekannten Einrichtung dient dazu ein ROM, d.h. ein Speicher in welchem die einzelnen Geschwindigkeitswerte fest eingespeichert sind. Ihre Bestimmung muß vor der Fertigstellung der Einrichtung erfolgen. Mit der Verwendung eines solchen ROM als Speicher für die Geschwindigkeitswerte der optimalen Bremskurve wird zwar ein Teil der oben genannten Nachteile umfangen. Da ROMs aber im normalen Betrieb nicht geändert werden können, ist es nicht möglich, die Werte der optimalen Bremskurve anzupassen, wenn sich z.B. durch eine Änderung der Masse des gesamten Positioniersystems oder bei verschiedenen Betriebsbedingungen andere Beschleunigungs- und Verzögerungswerte ergeben.

Ein anderer Nachteil der bekannten Einrichtung ist, daß die in dem ROM gespeicherten digitalen Werte nach ihrem Auslesen aus dem Speicher wieder in Analogwerte umgewandelt werden. Es bleiben somit die Nachteile umfangreicher Analogkomplexe erhalten.

Ferner ist aus der FR-A-225 8 661 eine Anordnung bekannt, bei der in einem ersten Speicher willkürliche Soll-Geschwindigkeitswerte für die Bremsphase gespeichert werden. In einem zweiten Speicher wird ein während der Beschleunigungsphase ermittelter Signalwert zwischengespeichert, mit dessen Hilfe dann während der Bremsphase die in dem ersten Speicher gespeicherten willkürlichen Soll-Geschwindigkeitswerte an veränderte Systemparameter angepaßt werden können.

Mit dieser bekannten Anordnung ist es zwar möglich, eine Einrichtung zum Regeln der Geschwindigkeit eines Positionierers in einem gewissen Umfang an Veränderungen der Systemparameter anzupassen, aber nur durch einen einzigen gespeicherten Wert. Änderungen des Soll-Geschwindigkeitsverlaufes derart, daß dieser genau dem Ist-Geschwindigkeitsverlaufs entspricht, sind damit jedoch nicht erzielbar. Nachteilig ist ferner, daß bei der bekannten Anordnung noch ein groß Teil der Schaltkreise Analogkreise mit den oben genannten Nachteilen sind.

Der vorliegenden Erfindung lag daher die Aufgabe zugrunde, eine Einrichtung der eingangs genannten Art zu schaffen, welche ohne Analogteil der Regelelektronik auskommt und bei der die gespeicherten digitalen Werte der optimalen Bremskurve jederzeit an jegliche Änderungen der Beschleunigungs- bzw. Verzögerungwerte des Positionierers anpaßbar sind.

Gelöst wird diese Aufgabe dadurch, daß jedesmal während der Beschleunigungsphase eines Positioniervorganges der zeitliche Verlauf der Ist-Geschwindigkeit des Positionierers in Form mehrerer aufeinanderfolgender Meßwerte festgestellt und die entsprechenden digitalisierten Werte als Werte der Bremskurve für die nachfolgende Bremsphase in einen RAM eingespeichert werden, daß während der Bremsphase die in dem RAM gespeicherten Werte gelesen und in einem Vergleicher mit einer der Ist-Geschwindigkeit des Positionierers proportionalen Größe verglichen werden, und daß daraus digitale Steuersignale für den Antrieb abgeleitet werden.

Weitere Einzelheiten der Erfindung ergeben sich aus den Unteransprüchen.

Figur 1 zeigt das Prinzipschaltbild für eine erfindungsgemäße Einrichtung zum Regeln der Geschwindigkeit eines Positionierers.

Figur 2 zeigt mehr ins Einzelne gehend eine Einrichtung, deren Prinzip in Figur 1 gezeigt ist.

Figur 3 zeigt in schematischer Darstellung eine Einrichtung gemäß der Erfindung unter Verwendung eines Mikroprozessorsystems.

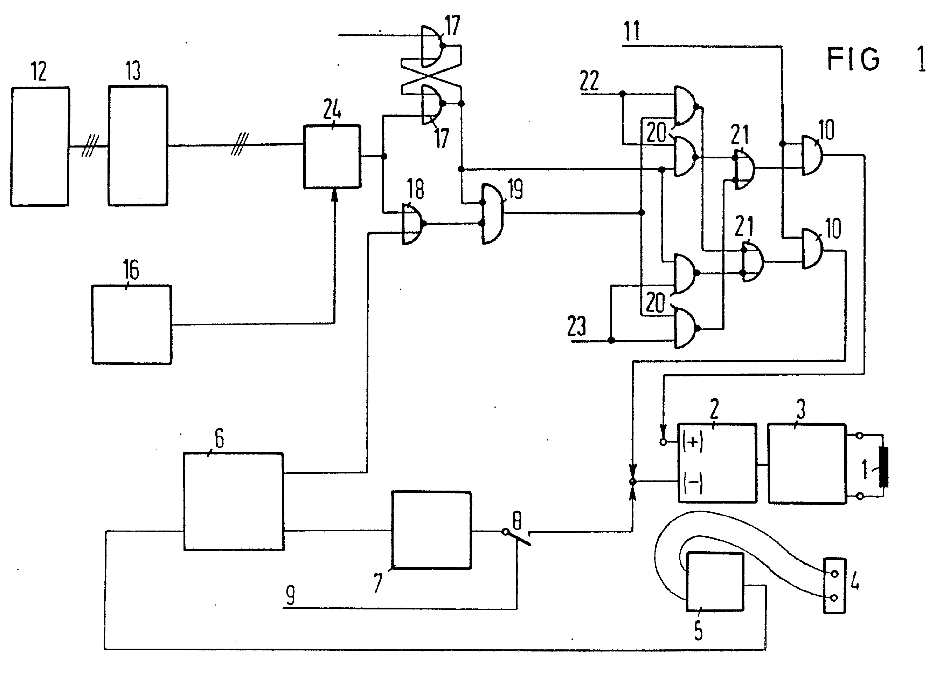

Die in Figur 1 dargestellte Einrichtung besteht wie bekannte Positioniersysteme für Magnetplattenspeicher aus einem Feinregelkreis und einem Grobregelkreis, die in an sich bekannter Weise einen Positionierer 1 über einen Summierverstärker 2 und einen Leistungsverstärker 3 ansteuern. Mit Hilfe des Servokopfes 4, der z.B. über einer separaten Servoplatte angeordnet ist, und eines Servoverstärkers 5 sowie einer an sich bekannten Einrichtung 6 werden zum einen Positionssignale erzeugt, die über einen Kompensator 7 und einen Schalter 8 dem einen Eingang des Summierverstärkers 2 zugeführt werden. Der Schalter 8 des Feinregelkreises kann mit Hilfe eines Signales auf der Leitung 9 geschlossen bzw. geöffnet werden und zwar in Übereinstimmung mit einem Signal auf der Leitung 11, das mit Hilfe zweier UND-Gatter 10 den Grobregelkreis anschaltet oder abtrennt. Die Einrichtung 6 liefert außerdem in bekannter Weise sogenannte Zylinderimpulse an ein ODER-Gatter 18.

Gegenüber früheren Positioniersystemen werden bei den in den Figuren 1,2 und 3 dargestellten Einrichtungen die Werte der optimalen Bremskurve für den Positionierer 1 nicht mehr mit Hilfe eines Funktionsgenerators aus Analogwerten abgeleitet und entsprechende Signale in analoger Form dem Summierverstärker 2 zugeführt, sondern die optimale Bremskurve wird in digitaler Form gespeichert. Dazu dient ein RAM 13, das einerseits mit dem Ausgang des Spurdifferenzregisters 12 und andererseits mit dem Eingang eines Digital-Vergleichers 24 verbunden ist.

Jedesmal während der Beschleunigungsphase eines Positioniervorganges wird der zeitliche Verlauf der Istgeschwindigkeit des Positionierers festgestellt und die entsprechenden digitalisierten Werte der bei der nachfolgenden Bremsphase benötigten Bremskurve in das RAM 13 eingespeichert.

Gemäß einem weiteren Merkmal der erfindungsgemäßen Einrichtung werden die in digitaler Form gespeicherten Werte der Bremskurve für den Positionierer mit einer der Ist-Geschwindigkeit des Positionierers proportionalen Größe verglichen und daraus ein digitales Steuersignal für den Positionierer 1 abgeleitet. Dazu dient bei der in Fig. 1 dargestellten Einrichtung der Vergleicher 24, dem einerseits die Ausgangssignale des RAM 13 und andererseits die digitalen Ausgangssignale eines Ist-Geschwindigkeitsgebers 16 zugeführt werden. Der Vergleicher 24 liefert zwei unterschiedliche Ausgangssignale, je nachdem ob die Ist-Geschwindigkeit des Positionierers 1 größer oder kleiner als der in dem RAM 13 gespeicherte Wert der Soll-Geschwindigkeit ist.

Am Ausgang des Vergleichers 24 ist ein aus zwei Gattern 17 bestehendes Latch angeordnet, das jedesmal beim Start eines Positioniervorganges gesetzt wird. Dieses Setzen des Latches bewirkt, daß der Leistungsverstärker 3 für den Positionierer 1 voll ausgesteuert wird. Dazu dient zum einen ein Signal auf der Leitung 11, welches die beiden UND-Gatter 10 öffnet, um überhaupt eine Bewegung des Positionierers 1 zu ermöglichen, und Signale auf der Leitung 22, wenn in Vorwärtsrichtung bzw. Signale auf der Leitung 23, wenn in Rückwärtsrichtung positioniert werden soll. Diese Signale steuern die aus den UND-Gattern 20 und den ODER-Gattern 21 bestehende Anordnung.

Sobald der Positionierer 1 seine Soll-Geschwindigkeit erreicht hat, gibt der Vergleicher 24 an seinem Ausgang ein Signal ab, welches andeutet, daß die Ist-Geschwindigkeit nunmehr größer als die Soll-Geschwindigkeit ist. Dies bewirkt zum einen ein Zurücksetzen des Latches 17 und zum anderen ein Ansteuern des Positionierers 1 über das ODER-Gatter 18, das UND-Gatter 19 und die nachfolgende, oben bereits beschriebene Anordnung aus den Gattern 10, 20 und 21. In diesem Fall fließt Verzögerungsstrom in den Positionierer 1, aber nur dann, wenn sich der Positionierer 1 bereits im Bereich der Bremskurve befindet. Andernfalls folgt zuerst eine Phase stromloser Fahrt mit Maximalgeschwindigkeit. Im Verzögerungsbereich wird während aktiver Zylinderimpulse, die von der Einrichtung 6 an das Gatter 18 geliefert werden, immer gebremst. Außerdem wird gebremst, solange die Ist-Geschwindigkeit größer als die Soll-Geschwindigkeit ist. Dieses Verfahren gewährleistet eine ruckarme Bremsung des Positionierers 1 und eine hohe Regelgenauigkeit der Anfangsgeschwindigkeit für die Feinregelphase.

Die großen Vorteile des erfindungsgemäßen Systems gegenüber bekannten Systemen mit analoger Geschwindigkeitsregelung bzw. mit analogen Funktionsgeneratoren sind der verringerte Schaltungsaufwand, die leichte Prüfbarkeit der Einrichtung, geringe Toleranzen, eine freie Programmierbarkeit und damit auch eine einfache Realisierung von Unstetigkeitsstellen.

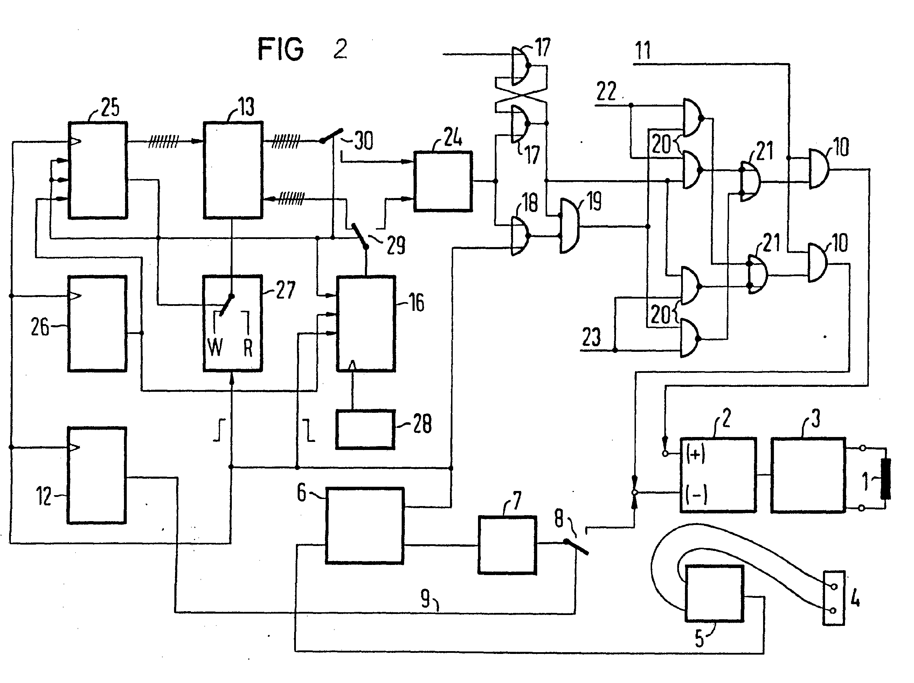

Fig. 2 zeigt mehr ins Einzelne gehend, wie bei einer Einrichtung nach Fig. 1 während der Beschleunigungsphase eines Positioniervorganges der zeitliche Verlauf der Ist-Geschwindigkeit des Positionierers festgestellt und die entsprechenden digitalisierten Werte als Werte der Bremskurve für die nachfolgende Bremsphase des Positioniervorganges in das RAM 13 eingespeichert werden.

Dazu dienen in der Einrichtung nach Fig. 2 in erster Linie ein Beschleunigungszähler 25 und ein Bremszähler 26. Ferner ist eine Speichersteuerschaltung 27 vorgesehen, die in bekannter Weise die für das Schreiben und Lesen des RAMs erforderlichen Impulsfolgen erzeugt und zwischen den beiden Zuständen Schreiben bzw. Lesen umschaltbar ist. Ferner sind zwei Schalter 29 und 30 vorgesehen, mit deren Hilfe die digitalisierten Werte der Istgeschwindigkeit des Positionierers in das RAM 13 eingeschrieben bzw. aus diesem ausgelesen werden können. Als digitaler Geschwindigkeitsgeber 16 ist ein Zähler vorgesehen, der durch einen Taktgeber 28 vorwärtsgeschaltet und durch die von der Einrichtung 6 kommenden Zylinderimpulse zurückgesetzt wird.

Wie eingangs erläutert, hat die Geschwindigkeit des Positionierers in einem zeitoptimal geregelten Positioniersystem nach einer Wurzelfunktion aus dem zurückgelegten Weg bzw. aus der Zielentfernung zu verlaufen. Bei Positioniervorgängen mit einer großen zurückzulegenden Spurdifferenz liegt zwischen den beiden Wurzelästen der Beschleunigungsphase und der Bremsphase ein zur Abszisse paralleler Funktionsteil d.h. eine Phase konstanter Maximalgeschwindigkeit. Bei Positioniervorgängen mit kleinen geradzahligen Spurdifferenzen fallen dagegen die Eckpunkte, d.h. das Ende der Beschleunigungsphase und der Beginn der Bremsphase zusammen. Für eine optimale Positionierung sind daher das Ende der Beschleunigungsphase und der Beginn der Bremsphase von wesentlicher Bedeutung. Deshalb werden bei dem Ausführungsbeispiel nach Fig. 2 diese Punkte des Geschwindigkeitsprofiles zu Beginn eines Positioniervorganges von der Gerätesteuerung ermittelt und das Ende der Beschleunigungsphase in den Beschleunigungszähler 25, der Beginn der Bremsphase in den Bremszähler 26 und der Wert für die gesamte zurückzulegende Spurdifferenz in das Spurdifferenzregister 12 eingegeben. An den Takteingängen dieser drei Zähler, die z.B. aus TTL-Bausteinen des Typs 74193 bestehen können, liegen die Zylinderimpulse vom Ausgang des Positionsdetektors 6. Der Statusausgang des Beschleunigungszählers 25, der beim Erreichen des Zählerstandes Null bzw. beim Überlauf einen Impuls abgibt, ist mit der Speicheransteuerschaltung 27 für das RAM 13 verbunden. Diese Speicheransteuerschaltung 27 liefert die für das Schreiben und Lesen des RAM 13 erforderlichen Impulsfolgen. Sie wird durch die Zylinderimpulse von der Einrichtung 6 getriggert und ist durch das Statussignal des Beschleunigungszählers 25 vom Schreiben auf Lesen umschaltbar.

Erfindungsgemäß wird jedesmal während der Beschleunigungsphase eines Positioniervorganges der zeitliche Verlauf der Ist-Geschwindigkeit des Positionierers festgestellt und die entsprechenden digitalisierten Werte als Werte der Bremskurve für die nachfolgende Bremsphase in das RAM 13 eingespeichert. Dazu dient bei der Einrichtung nach Fig. 2 der Ist-Geschwindigkeitsgeber 16, der im dargestellten Beispiel aus einem Zähler besteht, der durch die Taktimpulse eines Taktgebers 28 hochgezählt und durch die Zylinderimpulse von dem Positionsdetektor 6 rückgesetzt wird. Zum Erfassen eines Meßwertes der Ist-Geschwindigkeit des Positionierers wird der Zähler 16 beim Verlassen einer Spur mit der Rückflanke des Zylinderimpulses zurückgesetzt und sofort danach gestartet. Beim Erreichen der Vorderflanke des Zylinderimpulses der nächsten Spur wird der aktuelle Stand des Zählers festgehalten und, ausgelöst durch die Speicheransteuerschaltung 27 über den Schalter 29 in das RAM 13 übernommen. Mit der Rückflanke des Zylinderimpulses der Spur wird der Zähler wieder gelöscht und der Meßvorgang beginnt wieder von vorn.

Zur Adressierung derjenigen Speicherzellen des RAMs 13, in die ein jeweils festgestellter Geschwindigkeits-Istwert eingespeichert werden soll, dienen die Datenausgänge des Beschleunigungszählers 25, die mit den Adreßeingängen des RAMs 13 verbunden sind. Die von dem Ist-Geschwindigkeitsgeber 16 ermittelten Werte der Ist-Geschwindigkeit werden während der Beschleunigungsphase in absteigender Reihenfolge in RAM 13 gespeichert. Dabei ist die Adresse für den ersten Meßwert identisch mit der Relativadresse des Endes des Beschleunigungsphase, der letzte Meßwert der Istgeschwindigkeit wird dagegen unter der Adresse Null gespeichert. Dieser Wert muß während der nachfolgenden Bremsphase des Positioniervorganges dem während der Bremsphase ermittelten ersten Meßwert der Ist-Geschwindigkeit zugeordnet werden (Spiegelung der Beschleunigungskurve). Zu diesem Zweck wird die Zählrichtung des Beschleunigungszählers 25 vom Abwärtszählen auf Aufwärtszählen umgeschaltet. Durch gleichzeitiges Umsteuern der Speicheransteuerschaltung 27 von Schreiben auf Lesen werden nachfolgend die in dem RAM 13 gespeicherten Meßwerte aus der Beschleunigungsphase nunmehr in aufsteigender Reihenfolge aus dem RAM 13 gelesen.

Während dieser Zeit, d.h. während der Bremsphase, dient der Istgeschwindigkeitsgeber 16 wiederum zur Feststellung der Ist-Geschwindigkeit des Positionierers. Vor Beginn der Bremsphase werden aber durch das Signal an dem Statusausgang des Beschleunigungszählers 25 die beiden Schalter 29 und 30 umgeschaltet. Auf diese Weise gelangen jetzt zum einen die von dem Ist-Geschwindigkeitsgeber ermittelten Meßwerte einerseits und die aus dem RAM 13 gelesenen Meßwerte aus der Beschleunigungsphase andererseits zu dem digitalen Vergleicher 24, der wie in Verbindung mit Fig. 1 beschrieben, die weitere Steuerung des Bremsstromes in dem Positionierer 1 bewirkt.

Ein Positioniervorgang läuft im einzelnen folgendermaßen ab : Vor dem eigentlichen Start der Bewegung des Positionierers 1 werden die Zähler 12, 25 und 26 mit den entsprechenden Eckwerten des Geschwindigkeitsprofiles geladen und ihre Zählrichtung auf abwärts geschaltet. Die Speicheransteuerschaltung 27 ist so geschaltet, daß an ihrem Ausgang nach der Freigabe die Impulsfolgen zum Schreiben des RAM 13 abgegeben werden. Da die Datenausgänge des Beschleunigungszählers 25 an den Adreßeingängen des RAM 13 liegen, werden nach dem Start des Positioniervorganges mit jedem auftretenden Zylinderimpuls die im Ist-Geschwindigkeitsgeber 16 ermittelten Werte in absteigender Reihenfolge im RAM 13 gespeichert. Erreicht der Zähler 25 den Wert Null, was dem Ende der Beschleunigungsphase entspricht, wird der Beschleunigungsstrom für den Positionierer abgeschaltet, die Speicheransteuerschaltung 27 für das RAM 13 auf Lesen umgeschaltet und die Ausgänge des Zählers des Istgeschwindigkeitsgebers 16 über den Schalter 19 auf den digitalen Vergleicher 24 geschaltet. Außerdem werden der Zähler 16 und der Beschleunigungszähler 25 gesperrt und die Zählrichtung des Beschleunigungszählers 25 als Vorbereitung der Adressierung während der nachfolgenden Bremsphase von Abwärts auf Aufwärts umgeschaltet.

Schaltet nun im weiteren Verlauf des Positioniervorganges der Bremszähler 26 auf Null, was dem Beginn der Bremsphase entspricht, dann werden der Bremsstrom und die bisher gesperrten Zähler wieder freigegeben. Bei jedem nachfolgenden Zylinderimpuls werden dann die von dem Ist-Geschwindigkeitsgeber 16 gemessenen Werte einerseits und die durch die jetzt gegenläufige Adressierung aus dem RAM 13 gelesenen und entsprechend zugeordneten Sollwerte andererseits in den digitalen Vergleicher 24 eingegeben. Abhängig vom Ergebnis des Vergleiches der beiden anliegenden Werte wird der Bremsstrom dann ein- oder ausgeschaltet.

Wenn schließlich der Spurdifferenzzähler 12 den Wert Null erreicht hat, befindet sich der Positionierer über der gewünschten Zielspur. Jetzt werden der Bremsstrom abgeschaltet, alle Zähler gesperrt und der Feinregelkreis in bekannter Weise zugeschaltet.

Im Sinne einer weiteren Vereinfachung und Senkung der Kosten ist es vorteilhaft, die Ermittlung des zeitlichen Verlaufes der Ist-Geschwindigkeit des Positionierers und die Abspeicherung der entsprechenden digitalisierten Werte als Werte der Bremskurve für die nachfolgende Bremsphase unter Mithilfe eines Mikroprozessors vorzunehmen. In neueren Plattenspeichern werden mehr und mehr Mikroprozessoren für die Steuerung verschiedenster Abläufe eingesetzt. Wenn man z.B. einen solchen ohnehin in einem Magnetplattenspeichersystem vorhandenen Mikroprozessor erfindungsgemäß auch für die Ermittlung der Ist-Geschwindigkeit und die Abspeicherung der dabei ermittelten Werte einsetzt, kann man z.B. einen Teil der in den Figuren 1 und 2 dargestellten Logikelemente einsparen. Ferner ist es aber mit einem solchen Mikroprozessor dann möglich, zusätzlich noch Diagnosearbeiten durchzuführen, die bei einer Realisierung in konventioneller Hardware einen sehr erheblichen Aufwand darstellen.

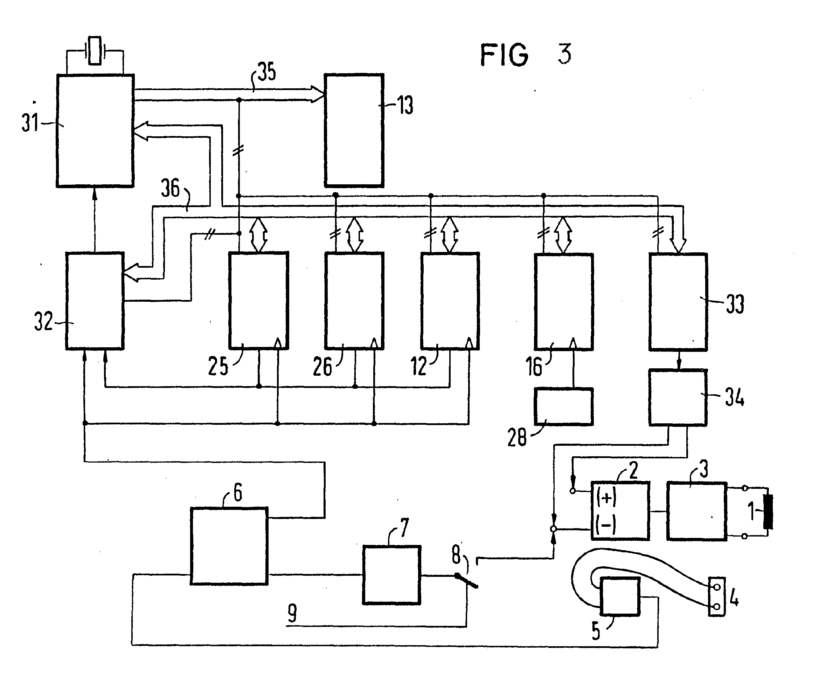

Fig. 3 zeigt in schematischer Darstellung eine Einrichtung gemäß der Erfindung unter Verwendung eines Mikroprozessorsystems. Dabei wurden gleiche Teile mit den gleichen Bezugszeichen wie in den Figuren 1 und 2 bezeichnet. Zusätzlich vorhanden sind in der Einrichtung nach Fig. 3 die Zentraleinheit 31 eines Mikroprozessors, z.B. ein Mikroprozessor vom Typ 8080 bzw. 8085, ein zu diesem System gehöriger Interruptbaustein 32, ein Ein/Ausgabebaustein 33 und eine Ansteuerschaltung 34 für den nachfolgenden Leistungsverstärker, die aus den vom Ein-/Ausgabebaustein 33 gelieferten digitalen Signalen die für die Ansteuerung der Verstärker 2 und 3 nach Stärke und Polarität erforderlichen Ströme erzeugt. Der Zentralprozessor 31 ist über den Adressenbus 35 zum einen mit dem RAM 13 und zum anderen mit dem Beschleunigungszähler 25, dem Bremszähler 26, dem Spurdifferenzregister 12, dem Ist-Geschwindigkeitsgeber 16 in Form eines Meßzählers mit Taktgeber 28, sowie mit dem Ein-/Ausgabebaustein 33 und dem Interruptbaustein 32 verbunden. Zum andern sind alle diese Bausteine über einen Datenbus 36 mit dem Zentralprozessor 31 in für Mikroprozessorsysteme üblicher Weise verbunden. Die Wahl der einzelnen Bausteine hängt natürlich von der Wahl des Mikroprozessorsystems selbst ab. Im Falle der Verwendung eines Prozessors 8080 bzw. 8085 kämen als Beschleunigungs-, Brems-, Spurdifferenz- und Meßzähler z.B. der Baustein 8253 in Frage und als Ein-/Ausgabebaustein der Baustein 8255.

Die Zähler 12, 25 und 26 sowie der Interruptbaustein 32 werden ähnlich wie bei der Einrichtung nach Fig. 2 durch die Zylinderimpulse von der Positionsdetektoreinrichtung 6 getaktet. Die Statusausgänge dieser Zähler liefern wie im Beispiel der Einrichtung nach Fig. 2 jeweils einen Impuls, wenn der Zählerstand den Wert Null erreicht. Diese Signale werden mit Hilfe des Interruptbausteins 32, der die Steuerung der einzelnen Interruptsignale (Latchen kurzer Impulse, Festlegung der Priorität, usw.) übernimmt, mit dem Interrupts-Anforderungs-Eingang des Prozessorbausteins 31 verbunden. Diese Interruptssignale starten die Abarbeitung der einzelnen Programmabschnitte.

Vor dem Beginn des eigentlichen Positioniervorganges werden aus der vorgegebenen Start- und Zieladresse die Spurdifferenz und die Eckpunkte des Geschwindigkeitsprofils ermittelt. Außerdem werden aus diesen Daten einzelne Bits für die Stromrichtung, die Positionierrichtung sowie die Polarität der Zieltspur gesetzt. Die daraus resultierenden Werte werden dann in die Zähler 12, 25 und 26 geladen, wobei wie bei der Einrichtung nach Fig. 2 das Ende der Beschleunigungsphase in den Zähler 25, der Beginn der Bremsphase in den Zähler 26 und die Spurdifferenz in den Zähler 12 geladen werden. Nach diesen Vorberechnungen werden mit dem Startbefehl für den Positioniervorgang die Zähler 12, 16, 25 und 26 freigegeben und über die Ansteuerschaltung 34 der Beschleunigungsstrom für den Positionierer 1 eingeschaltet. Beim Auftreten eines Zylinderimpulses von der Einrichtung 6 wird durch den Interruptbaustein 32 in dem Prozessor 31 ein Programm gestartet, das den aktuellen Wert des Zählers 16 liest und diesen Zähler sofort wieder auf Null zurücksetzt. Der gelesene Meßwert wird dann anschließend an der zugeordneten Stelle im RAM 13 abgespeichert. Dann läuft der Zähler 16 wieder an, bis ein erneuter Zylinderimpuls auftritt. Auf diese Weise wird bei jedem Zylinderimpuls ein Meßwert der Ist-Geschwindigkeit festgestellt und im RAM 13 abgespeichert. Gleichzeitig werden dabei die Zähler 12, 25 und 26 heruntergezählt.

Wenn dann der Zähler 25 an seinem Statusausgang ein die Zählerstellung Null und damit das Ende der Beschleunigungsphase anzeigendes Signal abgibt, wird ein Interrupt von dem Interruptbaustein 32 an den Prozessor 31 gegeben und dadurch — per Programm — der Beschleunigungsstrom für den Positionierer 1 abgeschaltet, die Aufnahme von Meßwerten aus dem Zähler 16 gestoppt und außerdem das Bit für die Strompolarität geändert.

Ein zu Beginn der Bremsphase von dem Bremszähler 26 über den Interruptbaustein 32 ausgelöster Interrupt führt wieder zum Einschalten des Bremsstromes für den Positionierer 1 und zur Freigabe des Meßzählers 16 und damit der erneuten Feststellung von Meßwerten der Ist-Geschwindigkeit des Positionierers. Die bei jedem nachfolgenden Zylinderimpuls anfallenden Meßwerte des Zählers 16 werden aber in der Bremsphase — per Programm — mit den entsprechend zugeordneten, in der Beschleunigungsphase aufgenommenen und im RAM 13 abgespeicherten Sollgeschwindigkeitswerten verglichen. Abhängig von dem Ergebnis dieses Vergleiches wird dann der Bremsstrom für den Positionierer während des nächsten Meßzyklusses für eine bestimmte Zeit (Pulsdauermodulation) eingeschaltet. Die Einschaltdauer für den Bremsstrom wird ebenfalls per Programm ermittelt.

Der beim Erreichen der Zielspur durch den Differenzzähler ausgelöste Interrupt veranlaßt ein Abschalten des Bremsstromes für den Positionierer 1, sperrt alle Zähler und schaltet in an sich bekannter Weise den Feinregelkreis zu.

Durch den Einsatz eines Mikroprozessors z.B. in der in Fig. 3 dargestellten Art ist mit einem relativ geringen zusätzlichen Aufwand eine gute Überwachung des ganzen Positioniervorganges möglich. Ebenso können Diagnoseroutinen mit dem gleichen System ablaufen.

In den Figur 2 und 3 ist als Einrichtung zum Erzeugen einer Größe, die der Ist-Geschwindigkeit des Positionierers proportional ist, ein Zähler 16 in Verbindung mit einem Taktgeber 28 gezeigt. Es wäre stattdessen aber durchaus möglich, einen an sich bekannten, auf analoger Basis arbeitenden Geschwindigkeitsgeber mit nachgeschaltetem Analog/Digitalwandler einzusetzen.

## Ansprüche

1. Einrichtung zum Regeln der Geschwindigkeit eines Positionierers für die Schreib-/Leseköpfe eines Magnetplattenspeichers, bei dem für eine zeitoptimale Regelung des Spurzugriffs der Positionierer erst mit einer konstanten Kraft beschleunigt und anschließend verzögert wird, mit einem Speicher, in welchem die optimale Bremskurve für den Positionierer in digitaler Form gespeichert wird, dadurch gekennzeichnet, daß jedesmal während der Beschleunigungsphase eines Positioniervorganges der zeitliche Verlauf der Ist-Geschwindigkeit des Positionierers (1) in Form mehrerer aufeinanderfolgender Meßwerte festgestellt und die entsprechenden digitalisierten Werte als Werte der Bremskurve für die nachfolgende Bremsphase in einen RAM (13) eingespeichert werden, daß während der Bremsphase die in dem RAM gespeicherten Werte gelesen und in einem Vergleicher (24) mit einer der Ist-Geschwindigkeit des Positionierers proportionalen Größe (16) verglichen werden, und daß daraus digitale Steuersignale für den Antrieb des Positionierers (1) abgeleitet werden.

2. Einrichtung nach Anspruch 1, dadurch gekennzeichnet, daß zum Feststellen des zeitlichen Verlaufes der Ist-Geschwindigkeit des Positionierers (1) während der Beschleunigungsphase, zum Speichern der festgestellten digitalisierten Werte der Ist-Geschwindigkeit, zum Vergleichen der gespeicherten Werte mit den Istwerten während der Bremsphase und zum Ableiten von Steuersignalen für den Antrieb des Positionierers (1) ein Mikroprozessor-System (31, 32, 33, 35, 36) vorgesehen ist.

## Claims

1. A device for regulating the speed of a positioner for the write/read heads of a magnetic disc store, in which for time optimal regulation of the track access the positioner is firstly accelerated with a constant force and subsequently delayed, and with a store in which the optimal braking curve for the positioner is stored in digital form, characterised in that each time during the acceleration phase of a positioning process the variation with time of the actual velocity of the positioner (1) is determined in the form of a plurality of successive measured values and the corresponding digitalised values are stored in a RAM (13) as values of the braking curve for the following braking phase, that during the braking phase the values which are stored in the RAM are read and compared with a magnitude (16) which is proportional to the actual speed of the positioner, and that digital control signals are derived therefrom for the positioner drive (1).

2. Device according to claim 1, characterised in that a micro-processor system (31, 32, 33, 35, 36) is provided for determining the variation with time of the actual velocity of the positioner (1) during the acceleration phase, for storing the determined digitalised values of the actual speed, for comparing the stored values with the actual values during the deceleration phase and for deriving control signals for the positioner drive (1).

**Revendications**

1. Installation pour réguler la vitesse d'un positionneur pour des têtes d'écriture/lecture d'une mémoire à disques magnétiques, dans laquelle, en vue d'une régulation optimale, dans le temps, de l'attaque de la piste, le positionneur est d'abord accéléré avec une force constante et est ensuite retardé, du type comportant une mémoire dans laquelle est mémorisée, sous forme numérique, la courbe de freinage maximum pour le positionneur, caractérisée par le fait que l'on détermine, à chaque fois, pendant la phase d'accélération d'une opération de positionnement, l'allure, en fonction du temps, de la vitesse réelle du positionneur (1), sous la forme de plusieurs valeurs de mesure successives et que les valeurs numériques correspondantes sont mémorisées dans une mémoire à accès aléatoire (13) comme valeur de la courbe de freinage pour la phase de freinage suivante, que pendant la phase de freinage, les valeurs mémorisées dans la mémoire à accès aléatoire, sont lues et sont comparées dans un comparateur (24) avec une grandeur (16) proportionnelle à la vitesse réelle du positionneur et que l'on en déduit des signaux de commande numériques pour l'entraînement du positionneur (1).

2. Installation selon la revendication 1, caractérisée par le fait que pour déterminer l'allure, en fonction du temps, de la vitesse réelle du positionneur (1), pendant la phase d'accélération, il est prévu un système à microprocesseur (31, 32, 33, 35, 36) pour mémoriser les valeurs déterminées et mises sous forme numérique de la vitesse réelle, pour comparer les valeurs mémorisées avec les valeurs réelles pendant la phase de freinage et pour déduire des signaux de commande pour l'entraînement du positionneur (1).

FIG 1

FIG 2

FIG 3